(19) Europäisches Patentamt / European Patent Office / Office européen des brevets

(11) **EP 4 517 263 A1**

(12) **EUROPEAN PATENT APPLICATION**
published in accordance with Art. 153(4) EPC

(43) Date of publication:
05.03.2025 Bulletin 2025/10

(21) Application number: 23937740.1

(22) Date of filing: 31.07.2023

(51) International Patent Classification (IPC):
*G01C 21/28* (2006.01)

(52) Cooperative Patent Classification (CPC):
G01B 11/00; G01C 21/28; G01S 17/08;
G01S 17/86; Y02T 10/40

(86) International application number:
PCT/CN2023/110169

(87) International publication number:
WO 2024/244147 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.05.2023 CN 202310636369

(71) Applicant: Momenta (Suzhou) Technology Co.,
Ltd.
Suzhou, Jiangsu 215100 (CN)

(72) Inventors:
• YU, Yijie
  Suzhou, Jiangsu 215100 (CN)
• CHEN, Bingbo
  Suzhou, Jiangsu 215100 (CN)

(74) Representative: Cleveland Scott York
5 Norwich Street
London EC4A 1DR (GB)

(54) **METHOD AND APPARATUS FOR DETERMINING ACTUAL VALUES OF VEHICLE THREE-DIMENSIONAL COORDINATES, DEVICE, MEDIUM, AND VEHICLE**

(57) The present disclosure discloses a method and an apparatus for determining a vehicle three-dimensional coordinate true value, a device, a medium, and a vehicle. The method includes: obtaining K sets of ego vehicle position information acquired by an inertial sensor of an auxiliary acquisition vehicle during K stops and K sets of main sensed data packets acquired by a main acquisition vehicle during K stops; calculating a coordinate transformation matrix between a startup vehicle coordinate system of the main acquisition vehicle and a startup vehicle coordinate system of the auxiliary acquisition vehicle based on the K sets of ego vehicle position information and the K sets of main sensed data packets; and calculating projection coordinate information of the auxiliary acquisition vehicle in the vehicle coordinate system of the main acquisition vehicle based on the coordinate transformation matrix and ego vehicle position information acquired by the inertial sensor of the auxiliary acquisition vehicle at a preset distance position; and taking the projection coordinate information as a three-dimensional coordinate true value of the auxiliary acquisition vehicle, a distance between the preset distance position and the main acquisition vehicle being greater than a preset distance threshold. Through the solutions provided in the present disclosure, a three-dimensional coordinate true value of a vehicle at an ultra-long distance is obtained.

Obtain K sets of ego vehicle position information acquired by an inertial sensor of the auxiliary acquisition vehicle during K stops and K sets of main sensed data packets acquired by the main acquisition vehicle during K stops, wherein K is greater than a preset number of times, each set of main sensed data packets is formed by sensed data with a plurality of timestamp frames, the sensed data of each timestamp frame includes three-dimensional coordinate information of a sensed vehicle, and the sensed vehicle includes at least the auxiliary acquisition vehicle — S110

Calculate a coordinate transformation matrix between a startup vehicle coordinate system of the main acquisition vehicle and a startup vehicle coordinate system of the auxiliary acquisition vehicle based on the K sets of ego vehicle position information and the K sets of main sensed data packets, wherein startup vehicle coordinate system refers to a vehicle coordinate system that uses a position, where an on-board computer of the vehicle is started up, as a coordinate system origin — S120

Calculate projection coordinate information of the auxiliary acquisition vehicle in the vehicle coordinate system of the main acquisition vehicle based on the coordinate transformation matrix and ego vehicle position information acquired by the inertial sensor of the auxiliary acquisition vehicle at the preset distance position; and take the projection coordinate information as a three-dimensional coordinate true value of the auxiliary acquisition vehicle, wherein a distance between the preset distance position and the main acquisition vehicle is greater than a preset distance threshold — S130

FIG. 1

## Description

### TECHNICAL FIELD

The present disclosure relates to the technical field of intelligent driving, and in particular, to a method and an apparatus for determining a vehicle three-dimensional coordinate true value, a device, a medium, and a vehicle.

### BACKGROUND

During traveling of a driverless vehicle, there is a need to detect vehicles on a road, to prevent accidents such as collisions and ensure safety of the traveling.

A vehicle-side sensor, such as lidar, may be mounted on the driverless vehicle. The lidar senses surrounding environments during the traveling of the driverless vehicle to obtain a three-dimensional coordinate true value of each sensed vehicle.

A sensing distance of a conventional lidar is only within a range from 60m to 120m. Once the distance exceeds 120m, the lidar cannot obtain any three-dimensional sensing result. Therefore, currently, a three-dimensional coordinate true value of a vehicle at an ultra-long distance cannot be obtained.

### SUMMARY

The present disclosure provides a method and apparatus for determining a vehicle three-dimensional coordinate true value, a device, a medium, and a vehicle, which can obtain a three-dimensional coordinate true value of a vehicle at an ultra-long distance. Specific technical solutions are as follows.

In a first aspect, some embodiments of the present disclosure provides a method for determining a vehicle three-dimensional coordinate true value. In an initial state, each of a main acquisition vehicle and an auxiliary acquisition vehicle is located at an initial point, and a vehicle-side sensor of each of the main acquisition vehicle and the auxiliary acquisition vehicle faces front of the vehicle; when the auxiliary acquisition vehicle travels forward, the main acquisition vehicle is stationary, and the vehicle-side sensors of the main acquisition vehicle and the auxiliary acquisition vehicle simultaneously acquire sensed data packets in a preset duration each time the auxiliary acquisition vehicle travels by a preset interval distance and stops; when the auxiliary acquisition vehicle stops for K times, the auxiliary acquisition vehicle continues to travel to a preset distance position and stops, in this case, the vehicle-side sensors of the main acquisition vehicle and the auxiliary acquisition vehicle simultaneously acquire the sensed data packets in the preset duration, and the method includes:

obtaining K sets of ego vehicle position information acquired by an inertial sensor of the auxiliary acquisition vehicle during K stops and K sets of main sensed data packets acquired by the main acquisition vehicle during K stops, herein, K is greater than a preset number of times, each set of main sensed data packets is formed by sensed data with a plurality of timestamp frames, and the sensed data of each timestamp frame includes three-dimensional coordinate information of a sensed vehicle, the sensed vehicle including at least the auxiliary acquisition vehicle;

calculating a coordinate transformation matrix between a startup vehicle coordinate system of the main acquisition vehicle and a startup vehicle coordinate system of the auxiliary acquisition vehicle based on the K sets of ego vehicle position information and the K sets of main sensed data packets, herein, the startup vehicle coordinate system refers to a vehicle coordinate system that uses a position, where an on-board computer of the vehicle is started up, as a coordinate system origin; and

calculating projection coordinate information of the auxiliary acquisition vehicle in the vehicle coordinate system of the main acquisition vehicle based on the coordinate transformation matrix and ego vehicle position information acquired by the inertial sensor of the auxiliary acquisition vehicle at the preset distance position; and taking the projection coordinate information as a three-dimensional coordinate true value of the auxiliary acquisition vehicle, herein, a distance between the preset distance position and the main acquisition vehicle is greater than a preset distance threshold.

In some embodiments, the calculating a coordinate transformation matrix between a startup vehicle coordinate system of the main acquisition vehicle and a startup vehicle coordinate system of the auxiliary acquisition vehicle based on the K sets of ego vehicle position information and the K sets of main sensed data packets includes:

taking a first set of main sensed data packets in the K sets of main sensed data packets as a current set of main sensed data packets, calculating first relative distance errors by traversing three-dimensional coordinate information of sensed vehicles corresponding to timestamp frames in the current set of main sensed data packets and first ego vehicle position information in a first set of ego vehicle position information based on nearest neighbor algorithm; determining three-dimensional coordinate information of a sensed vehicle corresponding to a minimum one of the first relative distance errors to be first three-dimensional coordinate information of the auxiliary acquisition vehicle acquired by the main acquisition vehicle at a first timestamp frame in the current set of main sensed data packets; and determining the first ego vehicle position information to be ego vehicle position information of the auxiliary acquisition vehicle corresponding to the first timestamp frame in the current set of main sensed data packets; calculating, for each timestamp frame in the current set of main sensed data packets except the first timestamp frame, a second relative distance error based on three-dimensional coordinate information of a sensed vehicle corresponding to the timestamp frame and the first three-dimensional coordinate information, determining three-dimensional coordinate information of a sensed vehicle corresponding to one of the second relative distance errors, which is less than a preset distance error threshold, to be second three-dimensional coordinate information of the auxiliary acquisition vehicle acquired by the main acquisition vehicle at the timestamp frame, calculating third relative distance errors by traversing the first set of ego vehicle position information and the second three-dimensional coordinate information based on nearest neighbor algorithm, and determining ego vehicle position information corresponding to a minimum one of the third relative distance errors to be ego vehicle position information of the auxiliary acquisition vehicle corresponding to the timestamp frame;

calculating a transformation matrix corresponding to the current set of main sensed data packets based on the three-dimensional coordinate information of the auxiliary acquisition vehicle acquired by the main acquisition vehicle at each timestamp frame, ego vehicle position information of the auxiliary acquisition vehicle corresponding to each timestamp frame, and a preset general graph optimization formula; and taking the transformation matrix as a current transformation matrix; and

taking a next set of main sensed data packets following the current set of main sensed data packets as a current set of main sensed data packets; calculating, based on a next set of ego vehicle position information following the first set of ego vehicle position information and the current transformation matrix, first three-dimensional coordinate information of the auxiliary acquisition vehicle acquired by the main acquisition vehicle at the first timestamp frame in the current set of main sensed data packets; returning to perform the calculating, for each timestamp frame in the current set of main sensed data packets except the first timestamp frame, a second relative distance error based on three-dimensional coordinate information of a sensed vehicle corresponding to the timestamp frame and the first three-dimensional coordinate information, until a transformation matrix corresponding to a final set of main sensed data packets in the K sets of main sensed data packets is obtained; and taking the transformation matrix corresponding to the final set of main sensed data packets as the coordinate transformation matrix between the startup vehicle coordinate system of the main acquisition vehicle and the startup vehicle coordinate system of the auxiliary acquisition vehicle.

In some embodiments, the calculating projection coordinate information of the auxiliary acquisition vehicle in the vehicle coordinate system of the main acquisition vehicle based on the coordinate transformation matrix and ego vehicle position information acquired by the inertial sensor of the auxiliary acquisition vehicle at the preset distance position includes:

calculating the projection coordinate information of the auxiliary acquisition vehicle in the vehicle coordinate system of the main acquisition vehicle by left multiplying the coordinate transformation matrix by the ego vehicle position information acquired by the inertial sensor of the auxiliary acquisition vehicle at the preset distance position.

In some embodiments, subsequent to the step of calculating projection coordinate information of the auxiliary acquisition vehicle in the vehicle coordinate system of the main acquisition vehicle based on the coordinate transformation matrix and ego vehicle position information acquired by the inertial sensor of the auxiliary acquisition vehicle at the preset distance position, the method for determining a vehicle three-dimensional coordinate true value further includes:

receiving a two-dimensional annotation box of the auxiliary acquisition vehicle manually annotated in a target main sensed data packet; performing two-dimensional-three-dimensional matching between the two-dimensional annotation box and a three-dimensional bounding box corresponding to the projection coordinate information; and performing, when the matching is successful, the taking the projection coordinate information as a three-dimensional coordinate true value of the auxiliary acquisition vehicle, herein, the target main sensed data packet is a main sensed data packet acquired by the vehicle-side sensor of the main acquisition vehicle when the auxiliary acquisition vehicle continues to travel to the preset distance position and stops.

In some embodiments, the performing two-dimensional-three-dimensional matching between the two-dimensional annotation box and a three-dimensional bounding box corresponding to the projection coordinate information includes:

projecting the three-dimensional bounding box corresponding to the projection coordinate information to an image plane where the two-dimensional annotation box is located to obtain a two-dimensional projection bounding box; and

calculating a first area of intersection and a second area of union between the two-dimensional annotation box and the two-dimensional projection bounding box, calculating a quotient of the first area and the second area, and determining that the matching is successful when the quotient is greater than a preset value.

In some embodiments, subsequent to the taking the projection coordinate information as a three-dimensional coordinate true value of the auxiliary acquisition vehicle, the method for determining a vehicle three-dimensional coordinate true value further includes:
receiving an adjustment to a vehicle height in the three-dimensional coordinate true value of the auxiliary acquisition vehicle to obtain an adjusted three-dimensional coordinate true value of the auxiliary acquisition vehicle.

In some embodiments, subsequent to the taking the projection coordinate information as a three-dimensional coordinate true value of the auxiliary acquisition vehicle, the method for determining a vehicle three-dimensional coordinate true value further includes:
calculating, based on the projection coordinate information and three-dimensional coordinate information of each sensed vehicle in an auxiliary sensed data packet acquired by the vehicle-side sensor of the auxiliary acquisition vehicle at the preset distance position, a three-dimensional coordinate true value of the sensed vehicle in the vehicle coordinate system of the main acquisition vehicle.

In a second aspect, some embodiments of the present disclosure provides an apparatus for determining a vehicle three-dimensional coordinate true value. In an initial state, each of a main acquisition vehicle and an auxiliary acquisition vehicle is located at an initial point, and a vehicle-side sensor of each of the main acquisition vehicle and the auxiliary acquisition vehicle faces front of the vehicle; when the auxiliary acquisition vehicle travels forward, the main acquisition vehicle is stationary, and the vehicle-side sensors of the main acquisition vehicle and the auxiliary acquisition vehicle simultaneously acquire sensed data packets in a preset duration each time the auxiliary acquisition vehicle travels by a preset interval distance and stops; when the auxiliary acquisition vehicle stops for K times, the auxiliary acquisition vehicle continues to travel to a preset distance position and stops, in this case, the vehicle-side sensors of the main acquisition vehicle and the auxiliary acquisition vehicle simultaneously acquire the sensed data packets in the preset duration, and the apparatus includes:

an obtaining module configured to: obtain K sets of ego vehicle position information acquired by an inertial sensor of the auxiliary acquisition vehicle during K stops and K sets of main sensed data packets acquired by the main acquisition vehicle during K stops, herein, K is greater than a preset number of times, each set of main sensed data packets is formed by sensed data with a plurality of timestamp frames, and the sensed data of each timestamp frame includes three-dimensional coordinate information of a sensed vehicle, the sensed vehicle including at least the auxiliary acquisition vehicle;
a coordinate transformation matrix determination module configured to: calculate a coordinate transformation matrix between a startup vehicle coordinate system of the main acquisition vehicle and a startup vehicle coordinate system of the auxiliary acquisition vehicle based on the K sets of ego vehicle position information and the K sets of main sensed data packets, herein, the startup vehicle coordinate system refers to a vehicle coordinate system that uses a position, where an on-board computer of the vehicle is started up, as a coordinate system origin; and
a first coordinate true value determination module configured to: calculate projection coordinate information of the auxiliary acquisition vehicle in the vehicle coordinate system of the main acquisition vehicle based on the coordinate transformation matrix and ego vehicle position information acquired by the inertial sensor of the auxiliary acquisition vehicle at the preset distance position; and taking the projection coordinate information as a three-dimensional coordinate true value of the auxiliary acquisition vehicle, herein, a distance between the preset distance position and the main acquisition vehicle is greater than a preset distance threshold.

In some embodiments, the coordinate transformation matrix determination module includes:

a first calculation submodule configured to: take a first set of main sensed data packets in the K sets of main sensed data packets as a current set of main sensed data packets; calculate first relative distance errors by traversing three-dimensional coordinate information of sensed vehicles corresponding to timestamp frames in the current set of main sensed data packets and first ego vehicle position information in a first set of ego vehicle position information based on nearest neighbor algorithm; determine three-dimensional coordinate information of a sensed vehicle corresponding to a minimum one of the first relative distance errors to be first three-dimensional coordinate information of the auxiliary acquisition vehicle acquired by the main acquisition vehicle at a first timestamp frame in the current set of main sensed data packets; and determine the first ego vehicle position information to be ego vehicle position information of the auxiliary acquisition vehicle corresponding to the first timestamp frame in the current set of main sensed data packets;
a second calculation submodule configured to: calculate, for each timestamp frame in the current set of main sensed data packets except the first timestamp frame, a second relative distance error based on three-dimensional coordinate information of a sensed vehicle corresponding to the timestamp frame and the first three-dimensional coordinate information; determine three-dimensional coordinate information of a sensed vehicle corresponding to one of the second relative distance errors, which is less than a preset distance error threshold, to be second three-dimensional coordinate information of the auxiliary acquisition vehicle acquired by the main acquisition vehicle at the timestamp frame; calculate third relative distance errors by traversing the first set of ego vehicle position information and the second three-dimensional coordinate information based on nearest neighbor algorithm, and determine ego vehicle position information corresponding to a minimum one of the third relative distance errors to be ego vehicle position information of the auxiliary acquisition vehicle corresponding to the timestamp frame;

a current transformation matrix determination submodule configured to: calculate a transformation matrix corresponding to the current set of main sensed data packets based on the three-dimensional coordinate information of the auxiliary acquisition vehicle acquired by the main acquisition vehicle at each timestamp frame, ego vehicle position information of the auxiliary acquisition vehicle corresponding to each timestamp frame, and a preset general graph optimization formula; and take the transformation matrix as a current transformation matrix; and

a third calculation submodule configured to: take a next set of main sensed data packets following the current set of main sensed data packets as a current set of main sensed data packets; calculate, based on a next set of ego vehicle position information following the first set of ego vehicle position information and the current transformation matrix, first three-dimensional coordinate information of the auxiliary acquisition vehicle acquired by the main acquisition vehicle at the first timestamp frame in the current set of main sensed data packets; return to perform the calculating, for each timestamp frame in the current set of main sensed data packets except the first timestamp frame, a second relative distance error based on three-dimensional coordinate information of a sensed vehicle corresponding to the timestamp frame and the first three-dimensional coordinate information, until a transformation matrix corresponding to a final set of main sensed data packets in the K sets of main sensed data packets is obtained; and take the transformation matrix corresponding to the final set of main sensed data packets as the coordinate transformation matrix between the startup vehicle coordinate system of the main acquisition vehicle and the startup vehicle coordinate system of the auxiliary acquisition vehicle.

In some embodiments, the first coordinate true value determination module is configured to:
calculate the projection coordinate information of the auxiliary acquisition vehicle in the vehicle coordinate system of the main acquisition vehicle by left multiplying the coordinate transformation matrix by the ego vehicle position information acquired by the inertial sensor of the auxiliary acquisition vehicle at the preset distance position.

In some embodiments, the apparatus for determining a vehicle three-dimensional coordinate true value further includes:
a receiving module configured to: receive, subsequent to the calculating projection coordinate information of the auxiliary acquisition vehicle in the vehicle coordinate system of the main acquisition vehicle is calculated based on the coordinate transformation matrix and the ego vehicle position information acquired by the inertial sensor of the auxiliary acquisition vehicle at the preset distance position, a two-dimensional annotation box of the auxiliary acquisition vehicle manually annotated in a target main sensed data packet; perform two-dimensional-three-dimensional matching between the two-dimensional annotation box and a three-dimensional bounding box corresponding to the projection coordinate information; and perform, when the matching is successful, the taking the projection coordinate information as a three-dimensional coordinate true value of the auxiliary acquisition vehicle, herein, the target main sensed data packet is a main sensed data packet acquired by the vehicle-side sensor of the main acquisition vehicle when the auxiliary acquisition vehicle continues to travel to the preset distance position and stops.

In some embodiments, the receiving module includes:

a projection submodule configured to: project the three-dimensional bounding box corresponding to the projection coordinate information to an image plane where the two-dimensional annotation box is located to obtain a two-dimensional projection bounding box; and

a matching submodule configured to: calculate a first area of intersection and a second area of union between the two-dimensional annotation box and the two-dimensional projection bounding box, calculate a quotient of the first area and the second area, and determine that the matching is successful when the quotient is greater than a preset value.

In some embodiments, the apparatus for determining a vehicle three-dimensional coordinate true value further includes:
an adjustment module configured to: receive, subsequent to the taking the projection coordinate information as the three-dimensional coordinate true value of the auxiliary acquisition vehicle, an adjustment to a vehicle height in the three-dimensional coordinate true value of the auxiliary acquisition vehicle to obtain an adjusted three-dimensional coordinate true value of the auxiliary acquisition vehicle.

In some embodiments, the apparatus for determining a vehicle three-dimensional coordinate true value further includes:

a second coordinate true value determination module configured to: subsequent to taking the projection coordinate information as the three-dimensional coordinate true value of the auxiliary acquisition vehicle, calculate, based on the projection coordinate information and three-dimensional coordinate information of each sensed vehicle in an auxiliary sensed data packet acquired by the vehicle-side sensor of the auxiliary acquisition vehicle at the preset distance position, a three-dimensional coordinate true value of the sensed vehicle in the vehicle coordinate system of the main acquisition vehicle.

In a third aspect, some embodiments of the present disclosure provide a computer-readable storage medium, having a computer program stored therein, herein, the program, when executed by a processor, implements the method for determining a vehicle three-dimensional coordinate true value as provided in any one of the embodiments of the present disclosure.

In a fourth aspect, some embodiments of the present disclosure provide an electronic device, including: one or more processors; and a storage apparatus coupled to the one or more processors and configured to store one or more programs. The one or more programs, when executed by the one or more processors, causes the electronic device to implement the method for determining a vehicle three-dimensional coordinate true value as provided in any one of the embodiments of the present disclosure.

In a fifth aspect, some embodiments of the present disclosure provide a vehicle, including the apparatus for determining a vehicle three-dimensional coordinate true value as provided in any one of the embodiments of the present disclosure or the electronic device as provided in any one of the embodiments of the present disclosure.

As can be seen from the above content, according to the method and apparatus for determining a vehicle three-dimensional coordinate true value, the device, the medium, and the vehicle provided in some embodiments of the present disclosure, K sets of ego vehicle position information acquired by an inertial sensor of the auxiliary acquisition vehicle during K stops and K sets of main sensed data packets acquired by the main acquisition vehicle may be obtained, K is greater than a preset number of times, each set of main sensed data packets is formed by sensed data with a plurality of timestamp frames, the sensed data of each timestamp frame includes three-dimensional coordinate information of a sensed vehicle, and the sensed vehicle includes at least the auxiliary acquisition vehicle; a coordinate transformation matrix between a startup vehicle coordinate system of the main acquisition vehicle and a startup vehicle coordinate system of the auxiliary acquisition vehicle is calculated based on the K sets of ego vehicle position information and the K sets of main sensed data packets, the startup vehicle coordinate system refers to a vehicle coordinate system that uses a position, where an on-board computer of the vehicle is started up, as a coordinate system origin; and projection coordinate information of the auxiliary acquisition vehicle in the vehicle coordinate system of the main acquisition vehicle is calculated based on the coordinate transformation matrix and ego vehicle position information acquired by the inertial sensor of the auxiliary acquisition vehicle at a preset distance position, and the projection coordinate information is taken as a three-dimensional coordinate true value of the auxiliary acquisition vehicle, a distance between the preset distance position and the main acquisition vehicle is greater than a preset distance threshold. In some embodiments of the present disclosure, through mutual cooperation between the main acquisition vehicle and the auxiliary acquisition vehicle, the coordinate transformation matrix between the startup vehicle coordinate system of the main acquisition vehicle and the startup vehicle coordinate system of the auxiliary acquisition vehicle is calculated based on the K sets of ego vehicle position information and the K sets of main sensed data packets, and then the ego vehicle position information of the auxiliary acquisition vehicle is projected into the vehicle coordinate system of the main acquisition vehicle based on the coordinate transformation matrix to obtain the three-dimensional coordinate true value of the auxiliary acquisition vehicle. Since the distance between the preset distance position and the main acquisition vehicle is greater than the preset distance threshold, the obtained three-dimensional coordinate true value of the auxiliary acquisition vehicle is a three-dimensional coordinate true value of an ultra-long distance, thereby realizing sensing of a three-dimensional coordinate true value of a vehicle at an ultra-long distance by the main acquisition vehicle. Certainly, any product or method implementing the present disclosure does not necessarily achieve all the advantages described above.

The embodiments of the present disclosure have the following creative points.

1) Through mutual cooperation between the main acquisition vehicle and the auxiliary acquisition vehicle, the coordinate transformation matrix between the startup vehicle coordinate system of the main acquisition vehicle and the startup vehicle coordinate system of the auxiliary acquisition vehicle is calculated based on the K sets of ego vehicle position information and the K sets of main sensed data packets, and then the ego vehicle position information of the auxiliary acquisition vehicle is projected into the vehicle coordinate system of the main acquisition vehicle based on the coordinate transformation matrix to obtain the three-dimensional coordinate true value of the auxiliary acquisition vehicle. Since the distance between the preset distance position and the main acquisition vehicle is greater than the preset distance threshold, the obtained three-dimensional coordinate true value of the auxiliary acquisition vehicle is a three-dimensional coordinate true value of an ultra-long distance, thereby realizing sensing of a three-dimensional coordinate true value of a vehicle at an ultra-long distance by the main acquisition vehicle.

2) According to some embodiments of the present disclosure, only through the mutual cooperation between the main acquisition vehicle and the auxiliary acquisition vehicle, an accurate three-dimensional coordinate true value of the vehicle at the ultra-long distance can be obtained without addition of a new sensor.

3) The coordinate transformation matrix between the startup vehicle coordinate system of the main acquisition vehicle and the startup vehicle coordinate system of the auxiliary acquisition vehicle is calculated based on the K sets of ego vehicle position information, the K sets of main sensed data packets, and nearest neighbor algorithm.

4) By receiving an adjustment to a vehicle height in the three-dimensional coordinate true value of the auxiliary acquisition vehicle, accuracy of an adjusted three-dimensional coordinate true value of the auxiliary acquisition vehicle in a height direction is improved.

5) By means of coordinate transformation, three-dimensional coordinate information of each sensed vehicle in an auxiliary sensed data packet acquired by the auxiliary acquisition vehicle at the preset distance position is transformed into the vehicle coordinate system of the main acquisition vehicle, to obtain a three-dimensional coordinate true value of the three-dimensional coordinate information of each sensed vehicle sensed by the auxiliary acquisition vehicle at an ultra-long distance in the vehicle coordinate system of the main acquisition vehicle.

## BRIEF DESCRIPTION OF DRAWINGS

In order to better illustrate the technical solutions in the embodiments of the present disclosure or the prior art, the accompanying drawings required to be used in the description of the embodiments or the related art will be briefly introduced below. The accompanying drawings in the following description merely illustrate some embodiments of the present disclosure. For those of ordinary skill in the art, other accompanying drawings may be obtained according to the accompanying drawings without creative efforts.

FIG. 1 is a schematic flowchart of a method for determining a vehicle three-dimensional coordinate true value according to some embodiments of the present disclosure;
FIG. 2 is a schematic diagram of a vehicle-side sensor of a main acquisition vehicle and a vehicle-side sensor of an auxiliary acquisition vehicle respectively acquiring sensed data packets according to some embodiments of the present disclosure;
FIG. 3 is a schematic structural diagram of an apparatus for determining a vehicle three-dimensional coordinate true value according to some embodiments of the present disclosure;
FIG. 4 is a schematic structural diagram of an electronic device according to some embodiments of the present disclosure; and
FIG. 5 is a schematic structural diagram of a vehicle according to some embodiments of the present disclosure.

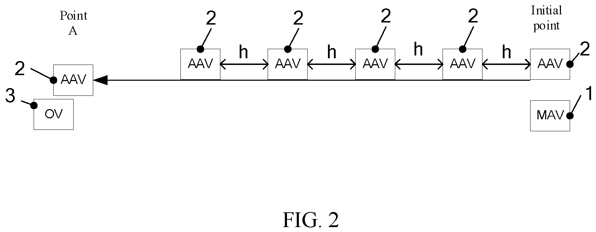

In FIG. 2,

1: main acquisition vehicle (MAV)_;
2: auxiliary acquisition vehicle (AAV);
3: other vehicle (OV);
h: preset interval distance.

## DESCRIPTION OF EMBODIMENTS

The technical solutions in the embodiments of the present disclosure will be described below with reference to the accompanying drawings in the embodiments of the present disclosure. The embodiments described herein are merely some of, rather than all of the embodiments of the present disclosure. Based on the embodiments of the present disclosure, all other embodiments obtained by those of ordinary skill in the art without creative efforts fall within a scope of the present disclosure.

It is to be noted that the terms "include", "have", and any variants thereof in the embodiments of the present disclosure and the accompanying drawings are intended to cover non-exclusive inclusion. For example, a process, method, system, product, or device that includes a series of steps or units is not limited to the listed steps or units, but may further include an unlisted step or unit, or further include other steps or units inherent to the process, method, product, or device.

Some embodiments of the present disclosure provide a method and an apparatus for determining a vehicle three-dimensional coordinate true value, a device, a medium, and a vehicle, which can obtain a three-dimensional coordinate true value of a vehicle at an ultra-long distance. Some embodiments of the present disclosure are described in details below.

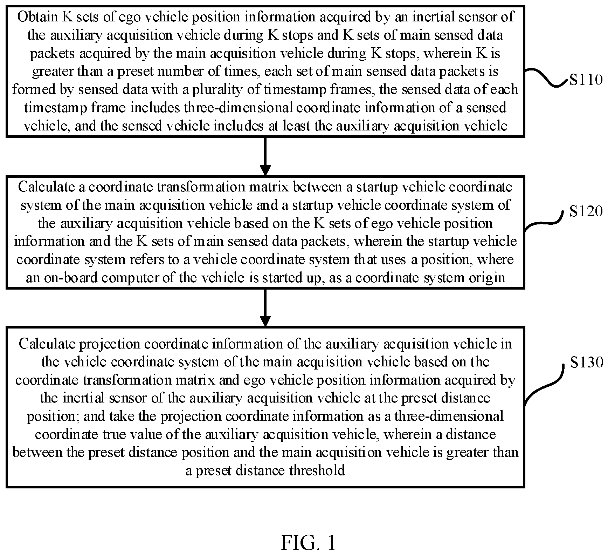

FIG. 1 is a schematic flowchart of a method for determining a vehicle three-dimensional coordinate true value according to some embodiments of the present disclosure. The method can be applied to an electronic device.

FIG. 2 is a schematic diagram of a vehicle-side sensor of a main acquisition vehicle 1 and a vehicle-side sensor of an auxiliary acquisition vehicle 2 respectively acquiring sensed data packets according to some embodiments of the present disclosure. Referring to FIG. 2, in an initial state, a main acquisition vehicle 1 and an auxiliary acquisition vehicle 2 are both located at an initial point, and vehicle-side sensors of the two vehicles both face front of the vehicles, that is, a direction of an arrow in FIG. 2. When the auxiliary acquisition vehicle 2 travels forward, that is, along the direction of the arrow, the main acquisition vehicle 1 is stationary.

The vehicle-side sensors of the two vehicles simultaneously acquire sensed data packets in a preset duration each time the auxiliary acquisition vehicle 2 travels by a preset interval distance h and stops, when the auxiliary acquisition vehicle 2 stops for K times, the auxiliary acquisition vehicle 2 continues to travel to a point A at a preset distance position and stops, in this case, the vehicle-side sensors of the two vehicles simultaneously acquire the sensed data packets in the preset duration, and when the auxiliary acquisition vehicle 2 stops at the point A, another vehicle 3 passes by the point A, and the main acquisition vehicle 1 is not in P gear when stationary.

On this basis, the above method includes the following steps.

In S110, K sets of ego vehicle position information acquired by an inertial sensor of the auxiliary acquisition vehicle during K stops and K sets of main sensed data packets acquired by the main acquisition vehicle during K stops are obtained, herein, K is greater than a preset number of times, each set of main sensed data packets is formed by sensed data with a plurality of timestamp frames, the sensed data of each timestamp frame includes three-dimensional coordinate information of a sensed vehicle, and the sensed vehicle includes at least the auxiliary acquisition vehicle.

During traveling of the auxiliary acquisition vehicle 2, an inertial sensor thereof acquires ego vehicle position information egopose of the auxiliary acquisition vehicle 2 in real time. The auxiliary acquisition vehicle 2 stops each time it travels by the preset interval distance h, and the vehicle-side sensor of the auxiliary acquisition vehicle 2 acquires the sensed data packets in the preset duration. Therefore, the inertial sensor of the auxiliary acquisition vehicle 2 may also acquire a set of ego vehicle position information corresponding to the preset duration at each stop, and K sets of ego vehicle position information are obtained for the K stops.

Since the vehicle-side sensors of the two vehicles simultaneously acquire the sensed data packets in the preset duration each time the auxiliary acquisition vehicle 2 travels by a preset interval distance h and stops, although the main acquisition vehicle 1 is stationary all the time, the main acquisition vehicle 1 receives K sets of main sensed data packets during the K stops. Each set of main sensed data packets is formed by sensed data with a plurality of timestamp frames, the sensed data of each timestamp frame includes three-dimensional coordinate information of a sensed vehicle, and K is greater than a preset number of times. For example, the preset number of times is 3.

Since the auxiliary acquisition vehicle 2 travels forward and the main acquisition vehicle 1 is stationary, the vehicle-side sensor of the main acquisition vehicle 1 can always sense the auxiliary acquisition vehicle 2. Therefore, the sensed vehicle sensed by the main acquisition vehicle 1 includes at least the auxiliary acquisition vehicle.

In order to obtain the three-dimensional coordinate true value of the vehicle at the ultra-long distance, the electronic device obtains K sets of ego vehicle position information acquired by the inertial sensor of the auxiliary acquisition vehicle during K stops and K sets of main sensed data packets acquired by the main acquisition vehicle during K stops.

The main acquisition vehicle 1 is a vehicle required to obtain the three-dimensional coordinate true value of the vehicle at the ultra-long distance, and the auxiliary acquisition vehicle 2 is a vehicle that assists the main acquisition vehicle 1 in obtaining the three-dimensional coordinate true value of the vehicle at the ultra-long distance.

In S120, a coordinate transformation matrix between a startup vehicle coordinate system of the main acquisition vehicle and a startup vehicle coordinate system of the auxiliary acquisition vehicle is calculated based on the K sets of ego vehicle position information and the K sets of main sensed data packets, herein, the startup vehicle coordinate system refers to a vehicle coordinate system that uses a position, where an on-board computer of the vehicle is started up, as a coordinate system origin.

After obtaining the K sets of ego vehicle position information and the K sets of main sensed data packets, the electronic device is required to calculate a coordinate transformation matrix between a startup vehicle coordinate system of the main acquisition vehicle 1 and a startup vehicle coordinate system of the auxiliary acquisition vehicle 2 based on the K sets of ego vehicle position information and the K sets of main sensed data packets, herein, the startup vehicle coordinate system refers to a vehicle coordinate system that uses a position, where an on-board computer of the vehicle is started up, as a coordinate system origin.

For example, step S 120 may include:

taking a first set of main sensed data packets in the K sets of main sensed data packets as a current set of main sensed data packets; calculating first relative distance errors by traversing three-dimensional coordinate information of sensed vehicles corresponding to timestamp frames in the current set of main sensed data packets and first ego vehicle position information in a first set of ego vehicle position information based on nearest neighbor algorithm;

determining three-dimensional coordinate information of a sensed vehicle corresponding to a minimum one of the first relative distance errors to be first three-dimensional coordinate information of the auxiliary acquisition vehicle acquired by the main acquisition vehicle at a first timestamp frame in the current set of main sensed data packets; and determining the first ego vehicle position information to be ego vehicle position information of the auxiliary acquisition vehicle corresponding to the first timestamp frame in the current set of main sensed data packets; calculating, for each timestamp frame in the current set of main sensed data packets except the first timestamp frame, a second relative distance error based on three-dimensional coordinate information of a sensed vehicle corresponding to the timestamp frame and the first three-dimensional coordinate information; determining three-dimensional coordinate information of a sensed vehicle corresponding to one of the second relative distance errors, which is less than a preset distance error threshold, to be second three-dimensional coordinate information of the auxiliary acquisition vehicle acquired by the main acquisition vehicle at the timestamp frame; calculating third relative distance errors by traversing the first set of ego vehicle position information and the second three-dimensional coordinate information based on nearest neighbor algorithm; and determining ego vehicle position information corresponding to a minimum one of the third relative distance errors to be ego vehicle position information of the auxiliary acquisition vehicle corresponding to the timestamp frame;

calculating a transformation matrix corresponding to the current set of main sensed data packets based on the three-dimensional coordinate information of the auxiliary acquisition vehicle acquired by the main acquisition vehicle at each timestamp frame, ego vehicle position information of the auxiliary acquisition vehicle corresponding to each timestamp frame, and a preset general graph optimization formula; and taking the transformation matrix as a current transformation matrix; and

taking a next set of main sensed data packets following the current set of main sensed data packets as a current set of main sensed data packets; calculating, based on a next set of ego vehicle position information following the first set of ego vehicle position information and the current transformation matrix, first three-dimensional coordinate information of the auxiliary acquisition vehicle acquired by the main acquisition vehicle at the first timestamp frame in the current set of main sensed data packets; returning to perform the calculating, for each timestamp frame in the current set of main sensed data packets except the first timestamp frame, a second relative distance error based on three-dimensional coordinate information of a sensed vehicle corresponding to the timestamp frame and the first three-dimensional coordinate information, until a transformation matrix corresponding to a final set of main sensed data packets in the K sets of main sensed data packets is obtained; and taking the transformation matrix corresponding to the final set of main sensed data packets as the coordinate transformation matrix between the startup vehicle coordinate system of the main acquisition vehicle and the startup vehicle coordinate system of the auxiliary acquisition vehicle.

When acquiring the first set of main sensed data packets, the main acquisition vehicle 1 is relatively close to the auxiliary acquisition vehicle 2. In this case, in order to obtain the three-dimensional coordinate information of the auxiliary acquisition vehicle 2 in the main acquisition vehicle 1, a first set of main sensed data packets in the K sets of main sensed data packets is taken as a current set of main sensed data packets, first relative distance errors are calculated by traversing three-dimensional coordinate information of sensed vehicles corresponding to timestamp frames in the current set of main sensed data packets and first ego vehicle position information in a first set of ego vehicle position information based on nearest neighbor algorithm, three-dimensional coordinate information of a sensed vehicle corresponding to a minimum first relative distance error is determined to be first three-dimensional coordinate information of the auxiliary acquisition vehicle 2 acquired by the main acquisition vehicle 1 at a first timestamp frame in the current set of main sensed data packets, herein, the first set of ego vehicle position information is a set of ego vehicle position information ranked first in the K sets of ego vehicle position information.

In other words, the three-dimensional coordinate information corresponding to the minimum first relative distance error is three-dimensional coordinate information acquired by the auxiliary acquisition vehicle 2 at the first timestamp frame in the main acquisition vehicle 1, and then the first ego vehicle position information is determined to be ego vehicle position information of the auxiliary acquisition vehicle 2 corresponding to the first timestamp frame in the current set of main sensed data packets.

At present, only the three-dimensional coordinate information of the auxiliary acquisition vehicle 2 at the first timestamp frame in the first set of main sensed data packets is obtained. In order to obtain three-dimensional coordinate information of the auxiliary acquisition vehicle 2 at other timestamps, there is a need to calculate, for each timestamp frame in the current set of main sensed data packets except the first timestamp frame, a second relative distance error based on three-dimensional coordinate information of a sensed vehicle corresponding to the timestamp frame and the first three-dimensional coordinate information, and three-dimensional coordinate information of a sensed vehicle corresponding to one of the second relative distance errors, which is less than a preset distance error threshold, is determined to be second three-dimensional coordinate information of the auxiliary acquisition vehicle acquired by the main acquisition vehicle at the timestamp frame, so as to obtain the three-dimensional coordinate information of the auxiliary acquisition vehicle 2 at other timestamps in the first set of main sensed data packets. For example, the preset distance error threshold may be 1m.

Then, third relative distance errors are calculated by traversing the first set of ego vehicle position information and the second three-dimensional coordinate information based on nearest neighbor algorithm, ego vehicle position information corresponding to a minimum one of the third relative distance errors is determined to be ego vehicle position information of the auxiliary acquisition vehicle 2 corresponding to the timestamp frame, and three-dimensional coordinate information of the auxiliary acquisition vehicle 2 acquired by the main acquisition vehicle 1 at each timestamp frame and ego vehicle position information of the auxiliary acquisition vehicle 2 corresponding to each timestamp frame are finally obtained.

After the three-dimensional coordinate information of the auxiliary acquisition vehicle 2 acquired by the main acquisition vehicle 1 at each timestamp frame and the ego vehicle position information of the auxiliary acquisition vehicle 2 corresponding to each timestamp frame are obtained, a transformation matrix corresponding to the current set of main sensed data packets is calculated based on the three-dimensional coordinate information of the auxiliary acquisition vehicle 2 acquired by the main acquisition vehicle 1 at each timestamp frame, ego vehicle position information of the auxiliary acquisition vehicle 2 corresponding to each timestamp frame, and a preset general graph optimization formula, and the transformation matrix is taken as a current transformation matrix. For example, the current transformation matrix is a 4x4 transformation matrix.

In this way, the first set of main sensed data packets has been processed, and the current transformation matrix representing a transformation relationship between the three-dimensional coordinate information of the auxiliary acquisition vehicle 2 acquired by the main acquisition vehicle 1 and the ego vehicle position information of the auxiliary acquisition vehicle 2 is obtained.

The three-dimensional coordinate information of the auxiliary acquisition vehicle 2 in the vehicle coordinate system of the main acquisition vehicle 1 and the ego vehicle position information of the auxiliary acquisition vehicle 2 satisfy the following formula:

$$
\xi^* = \underset{\xi}{\arg\min} \sum_i \| T_A^B \, p_{b_i}^A - p_{b_i}^B \|_2 = \underset{\xi}{\arg\min} \sum_i \| \exp(\hat{\xi}) \, p_{b_i}^A - p_{b_i}^B \|_2
$$

where $\xi^*$ denotes a general graph optimization error, $\xi$ denotes Lie algebra corresponding to a se3 special Euclidean set, B denotes the vehicle coordinate system of the auxiliary acquisition vehicle, A denotes the vehicle coordinate system of the main acquisition vehicle, $T_A^B$ denotes a 4x4 transformation matrix from A to B, $p_{bi}^A$ denotes three-dimensional coordinate information of a point $p_{bi}$ in the vehicle coordinate system of the main acquisition vehicle (i.e., three-dimensional coordinate information of the auxiliary acquisition vehicle 2 acquired by the main acquisition vehicle 1), argmin denotes a value of a number that makes the formula satisfy a minimum value, $p_{bi}^B$ denotes three-dimensional coordinate information of the point $p_{bi}$ in the vehicle coordinate system of the auxiliary acquisition vehicle (i.e., ego vehicle position information of the vehicle B), i denotes a count point, b denotes the vehicle B, $p_{bi}$ denotes an ith position point of the vehicle B, $\hat{\xi}$ denotes a skew symmetric matrix, exp denotes exponential mapping, and $\| \|_2$ denotes a 2-Norm.

In the following, other sets of main sensed data packets except the first set of main sensed data packets in the K sets of main sensed data packets are processed. A next set of main sensed data packets following the current set of main sensed data packets is taken as a current set of main sensed data packets, and when acquiring a second set of main sensed data packets, the main acquisition vehicle 1 is relatively far away from the auxiliary acquisition vehicle 2. Therefore, there is an error between a second set of ego vehicle position information and the three-dimensional coordinate information of the auxiliary acquisition vehicle 2 in the main acquisition vehicle 1. Therefore, there is a need to substitute the current transformation matrix calculated above into the second set of ego vehicle position information to obtain three-dimensional coordinate information of the auxiliary acquisition vehicle 2 in the main acquisition vehicle 1 at this point.

For example, the first three-dimensional coordinate information of the auxiliary acquisition vehicle 2 acquired by the main acquisition vehicle 1 at the first timestamp frame in the current set of main sensed data packets is calculated based on a next set of ego vehicle position information following the first set of ego vehicle position information and the current transformation matrix, the step of calculating, for each timestamp frame in the current set of main sensed data packets except the first timestamp frame, a second relative distance error based on three-dimensional coordinate information of a sensed vehicle corresponding to the timestamp frame and the first three-dimensional coordinate information is performed, until a transformation matrix corresponding to a final set of main sensed data packets in the K sets of main sensed data packets is obtained, the transformation matrix corresponding to the final set of main sensed data packets is taken as the coordinate transformation matrix between the startup vehicle coordinate system of the main acquisition vehicle 1 and the startup vehicle coordinate system of the auxiliary acquisition vehicle 2.

Therefore, the coordinate transformation matrix between the startup vehicle coordinate system of the main acquisition vehicle and the startup vehicle coordinate system of the auxiliary acquisition vehicle is calculated based on the K sets of ego vehicle position information, the K sets of main sensed data packets, and nearest neighbor algorithm.

In S130, projection coordinate information of the auxiliary acquisition vehicle in the vehicle coordinate system of the main acquisition vehicle is calculated based on the coordinate transformation matrix and ego vehicle position information acquired by the inertial sensor of the auxiliary acquisition vehicle at the preset distance position, and the projection coordinate information is taken as a three-dimensional coordinate true value of the auxiliary acquisition vehicle, herein, a distance between the preset distance position and the main acquisition vehicle is greater than a preset distance threshold.

When the auxiliary acquisition vehicle 2 travels forward, the main acquisition vehicle 1 is stationary all the time. Therefore, an ego vehicle coordinate system of the main acquisition vehicle 1 is the startup vehicle coordinate system. Therefore, the coordinate transformation matrix may be considered as a transformation matrix of the startup vehicle coordinate system of the auxiliary acquisition vehicle 2 relative to the startup vehicle coordinate system of the main acquisition vehicle 1. In this case, the three-dimensional coordinate information of the auxiliary acquisition vehicle 2 in the main acquisition vehicle 1 at the preset distance position is also coordinate information of the auxiliary acquisition vehicle 2 in the startup vehicle coordinate system of the main acquisition vehicle 1.

Therefore, after the coordinate transformation matrix is obtained, projection coordinate information of the auxiliary acquisition vehicle 2 in the vehicle coordinate system of the main acquisition vehicle 1 can be calculated based on the coordinate transformation matrix and ego vehicle position information acquired by the inertial sensor of the auxiliary acquisition vehicle 2 at the point A at the preset distance position, and the projection coordinate information is taken as a three-dimensional coordinate true value of the auxiliary acquisition vehicle 2, herein, a distance between the preset distance position and the main acquisition vehicle 1 is greater than a preset distance threshold. For example, the preset distance threshold is 300m.

Since the distance between the preset distance position and the main acquisition vehicle 1 is greater than the preset distance threshold, indicating that the preset distance position is far away from the main acquisition vehicle 1, therefore, the obtained three-dimensional coordinate true value of the auxiliary acquisition vehicle 2 is the three-dimensional coordinate true value of the ultra-long distance.

For example, the calculating projection coordinate information of the auxiliary acquisition vehicle 2 in the vehicle coordinate system of the main acquisition vehicle 1 based on the coordinate transformation matrix and ego vehicle position information acquired by the inertial sensor of the auxiliary acquisition vehicle 2 at the preset distance position may include: calculating projection coordinate information of the auxiliary acquisition vehicle 2 in the vehicle coordinate system of the main acquisition vehicle 1 by left multiplying the coordinate transformation matrix by the ego vehicle position information acquired by the inertial sensor of the auxiliary acquisition vehicle 2 at the preset distance position.

As can be seen from the above content, in some embodiments of the present disclosure, K sets of ego vehicle position information acquired by an inertial sensor of the auxiliary acquisition vehicle during K stops and K sets of main sensed data packets acquired by the main acquisition vehicle during K stops can be obtained, herein, K is greater than a preset number of times, each set of main sensed data packets is formed by sensed data with a plurality of timestamp frames, the sensed data of each timestamp frame includes three-dimensional coordinate information of a sensed vehicle, and the sensed vehicle includes at least the auxiliary acquisition vehicle; a coordinate transformation matrix between a startup vehicle coordinate system of the main acquisition vehicle and a startup vehicle coordinate system of the auxiliary acquisition vehicle is calculated based on the K sets of ego vehicle position information and the K sets of main sensed data packets, the startup vehicle coordinate system refers to a vehicle coordinate system that uses a position, where an on-board computer of the vehicle is started up, as a coordinate system origin; and projection coordinate information of the auxiliary acquisition vehicle in the vehicle coordinate system of the main acquisition vehicle is calculated based on the coordinate transformation matrix and ego vehicle position information acquired by the inertial sensor of the auxiliary acquisition vehicle at the preset distance position, and the projection coordinate information is taken as a three-dimensional coordinate true value of the auxiliary acquisition vehicle, a distance between the preset distance position and the main acquisition vehicle is greater than a preset distance threshold. In some embodiments of the present disclosure, through mutual cooperation between the main acquisition vehicle and the auxiliary acquisition vehicle, the coordinate transformation matrix between the startup vehicle coordinate system of the main acquisition vehicle and the startup vehicle coordinate system of the auxiliary acquisition vehicle is calculated based on the K sets of ego vehicle position information and the K sets of main sensed data packets, and then the ego vehicle position information of the auxiliary acquisition vehicle is projected into the vehicle coordinate system of the main acquisition vehicle based on the coordinate transformation matrix to obtain the three-dimensional coordinate true value of the auxiliary acquisition vehicle. Since the distance between the preset distance position and the main acquisition vehicle 1 is greater than the preset distance threshold, the obtained three-dimensional coordinate true value of the auxiliary acquisition vehicle 2 is a three-dimensional coordinate true value of an ultra-long distance, thereby realizing sensing of a three-dimensional coordinate true value of a vehicle at an ultra-long distance by the main acquisition vehicle.

Moreover, in some embodiments of the present disclosure, only through the mutual cooperation between the main acquisition vehicle and the auxiliary acquisition vehicle, an accurate three-dimensional coordinate true value of the vehicle at the ultra-long distance can be obtained without addition of a new sensor.

In some embodiments, subsequent to step S130, the method for determining a vehicle three-dimensional coordinate true value may further include:

receiving an adjustment to a vehicle height in the three-dimensional coordinate true value of the auxiliary acquisition vehicle to obtain an adjusted three-dimensional coordinate true value of the auxiliary acquisition vehicle.

Since a road surface is not completely without a height, the obtained three-dimensional coordinate true value of the auxiliary acquisition vehicle 2 has a certain offset in a height direction, and the height is required to be adjusted manually. The electronic device receives an adjustment to a vehicle height in the three-dimensional coordinate true value of the auxiliary acquisition vehicle 2 to obtain an adjusted three-dimensional coordinate true value of the auxiliary acquisition vehicle 2.

Therefore, by receiving an adjustment to a vehicle height in the three-dimensional coordinate true value of the auxiliary acquisition vehicle, accuracy of an adjusted three-dimensional coordinate true value of the auxiliary acquisition vehicle in a height direction is improved.

In some other embodiments, subsequent to step S130, the method for determining a vehicle three-dimensional coordinate true value may further include:

calculating, based on the projection coordinate information and three-dimensional coordinate information of each sensed vehicle in an auxiliary sensed data packet acquired by the vehicle-side sensor of the auxiliary acquisition vehicle at the preset distance position, a three-dimensional coordinate true value of the sensed vehicle in the vehicle coordinate system of the main acquisition vehicle.

By taking the projection coordinate information as the three-dimensional coordinate true value of the auxiliary acquisition vehicle 2, only the three-dimensional coordinate true value of the auxiliary acquisition vehicle 2 sensed at an ultra-long distance by the main acquisition vehicle 1 is obtained, and the three-dimensional coordinate information of each sensed vehicle in the auxiliary sensed data packet acquired by the auxiliary acquisition vehicle 2 at the preset distance position may further be transformed into the vehicle coordinate system of the main acquisition vehicle 1. That is, a three-dimensional coordinate true value of the sensed vehicle in the vehicle coordinate system of the main acquisition vehicle is calculated based on the projection coordinate information and three-dimensional coordinate information of each sensed vehicle in an auxiliary sensed data packet acquired by the vehicle-side sensor of the auxiliary acquisition vehicle at the preset distance position.

For example, the calculating, based on the projection coordinate information and three-dimensional coordinate information of each sensed vehicle in an auxiliary sensed data packet acquired by the vehicle-side sensor of the auxiliary acquisition vehicle at the preset distance position, a three-dimensional coordinate true value of the sensed vehicle in the vehicle coordinate system of the main acquisition vehicle may include:

calculating the three-dimensional coordinate true value of the sensed vehicle in the vehicle coordinate system of the main acquisition vehicle by left multiplying the three-dimensional coordinate information of each sensed vehicle in the auxiliary sensed data packet acquired by the vehicle-side sensor of the auxiliary acquisition vehicle at the preset distance position by projection coordinate information.

Therefore, by means of coordinate transformation, three-dimensional coordinate information of each sensed vehicle in an auxiliary sensed data packet acquired by the auxiliary acquisition vehicle 2 at the preset distance position is transformed into the vehicle coordinate system of the main acquisition vehicle 1, to obtain a three-dimensional coordinate true value of the three-dimensional coordinate information of each sensed vehicle sensed by the auxiliary acquisition vehicle 2 at an ultra-long distance in the vehicle coordinate system of the main acquisition vehicle 1.

In some other embodiments, subsequent to the step of calculating projection coordinate information of the auxiliary acquisition vehicle in the vehicle coordinate system of the main acquisition vehicle based on the coordinate transformation matrix and ego vehicle position information acquired by the inertial sensor of the auxiliary acquisition vehicle at the preset distance position, the method for determining a vehicle three-dimensional coordinate true value may further include:

receiving a two-dimensional annotation box of the auxiliary acquisition vehicle manually annotated in a target main sensed data packet; performing two-dimensional-three-dimensional matching between the two-dimensional annotation box and a three-dimensional bounding box corresponding to the projection coordinate information; and performing, when the matching is successful, the step of taking the projection coordinate information as a three-dimensional coordinate true value of the auxiliary acquisition vehicle, herein, the target main sensed data packet is a main sensed data packet acquired by the vehicle-side sensor of the main acquisition vehicle when the auxiliary acquisition vehicle continues to travel to the preset distance position and stops.

Since the obtained projection coordinate information may not be accurate, there is a need to determine whether the projection coordinate information is accurate. For example, a two-dimensional annotation box of the auxiliary acquisition vehicle 2 manually annotated in a target main sensed data packet is received, two-dimensional-three-dimensional matching between the two-dimensional annotation box and a three-dimensional bounding box corresponding to the projection coordinate information is performed, and when the matching is successful, indicating that the obtained projection coordinate information is accurate, in this case, the step of taking the projection coordinate information as a three-dimensional coordinate true value of the auxiliary acquisition vehicle is performed, herein, the target main sensed data packet is a main sensed data packet acquired by the vehicle-side sensor of the main acquisition vehicle 1 when the auxiliary acquisition vehicle 2 continues to travel to the point A at the preset distance position and stops.

For example, the performing two-dimensional-three-dimensional matching between the two-dimensional annotation box and a three-dimensional bounding box corresponding to the projection coordinate information may include:

projecting the three-dimensional bounding box corresponding to the projection coordinate information to an image plane where the two-dimensional annotation box is located to obtain a two-dimensional projection bounding box; and calculating a first area of intersection and a second area of union between the two-dimensional annotation box and the two-dimensional projection bounding box, calculating a quotient of the first area and the second area, and determining that the matching is successful when the quotient is greater than a preset value.

The two-dimensional-three-dimensional matching between the two-dimensional annotation box and the three-dimensional bounding box corresponding to the projection coordinate information is performed by first reducing a three dimension to a two dimension and then performing matching with the two-dimensional annotation box. That is, the three-dimensional bounding box corresponding to the projection coordinate information is projected to the image plane where the two-dimensional annotation box is located to obtain the two-dimensional projection bounding box, the first area of intersection and the second area of union between the two-dimensional annotation box and the two-dimensional projection bounding box are calculated, the quotient of the first area and the second are is calculated, and when the quotient is greater than a preset value, indicating that the two are similar, it is determined that the matching is successful.

Therefore, whether the two-dimensional annotation box matches the three-dimensional bounding box corresponding to the projection coordinate information is determined by two-dimensional-three-dimensional matching.

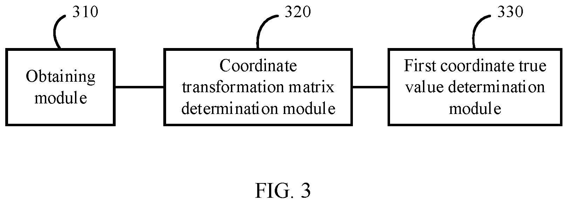

FIG. 3 is a schematic structural diagram of an apparatus for determining a vehicle three-dimensional coordinate true value according to some embodiments of the present disclosure. Referring to FIG. 3, in an initial state, a main acquisition vehicle and an auxiliary acquisition vehicle are both located at an initial point, and vehicle-side sensors of the two vehicles both face front of the vehicles, when the auxiliary acquisition vehicle travels forward, the main acquisition vehicle is stationary, and the vehicle-side sensors of the two vehicles simultaneously acquire sensed data packets in a preset duration each time the auxiliary acquisition vehicle travels by a preset interval distance and stops, when the auxiliary acquisition vehicle stops for K times, the auxiliary acquisition vehicle continues to travel to a preset distance position and stops, in this case, the vehicle-side sensors of the two vehicles simultaneously acquire the sensed data packets in the preset duration, and the apparatus may include:

an obtaining module 310 configured to: obtain K sets of ego vehicle position information acquired by an inertial sensor of the auxiliary acquisition vehicle during K stops and K sets of main sensed data packets acquired by the main acquisition vehicle during K stops, herein, K is greater than a preset number of times, each set of main sensed data packets is formed by sensed data with a plurality of timestamp frames, and the sensed data of each timestamp frame includes three-dimensional coordinate information of a sensed vehicle, the sensed vehicle including at least the auxiliary acquisition vehicle;

a coordinate transformation matrix determination module 320 configured to: calculate a coordinate transformation matrix between a startup vehicle coordinate system of the main acquisition vehicle and a startup vehicle coordinate system of the auxiliary acquisition vehicle based on the K sets of ego vehicle position information and the K sets of main sensed data packets, herein, the startup vehicle coordinate system refers to a vehicle coordinate system that uses a position, where an on-board computer of the vehicle is started up, as a coordinate system origin; and

a first coordinate true value determination module 330 configured to: calculate projection coordinate information of the auxiliary acquisition vehicle in the vehicle coordinate system of the main acquisition vehicle based on the coordinate transformation matrix and ego vehicle position information acquired by the inertial sensor of the auxiliary acquisition vehicle at the preset distance position; and take the projection coordinate information as a three-dimensional coordinate true value of the auxiliary acquisition vehicle, herein, a distance between the preset distance position and the main acquisition vehicle is greater than a preset distance threshold.

According to the apparatus provided in some embodiments of the present disclosure, K sets of ego vehicle position information acquired by an inertial sensor of the auxiliary acquisition vehicle during K stops and K sets of main sensed data packets acquired by the main acquisition vehicle during K stops can be obtained, K is greater than a preset number of times, each set of main sensed data packets is formed by sensed data with a plurality of timestamp frames, the sensed data of each timestamp frame includes three-dimensional coordinate information of a sensed vehicle, and the sensed vehicle includes at least the auxiliary acquisition vehicle; a coordinate transformation matrix between a startup vehicle coordinate system of the main acquisition vehicle and a startup vehicle coordinate system of the auxiliary acquisition vehicle is calculated based on the K sets of ego vehicle position information and the K sets of main sensed data packets, herein, the startup vehicle coordinate system refers to a vehicle coordinate system that uses a position, where an on-board computer of the vehicle is started up, as a coordinate system origin; and projection coordinate information of the auxiliary acquisition vehicle in the vehicle coordinate system of the main acquisition vehicle is calculated based on the coordinate transformation matrix and ego vehicle position information acquired by the inertial sensor of the auxiliary acquisition vehicle at the preset distance position, and the projection coordinate information is taken as a three-dimensional coordinate true value of the auxiliary acquisition vehicle, a distance between the preset distance position and the main acquisition vehicle being greater than a preset distance threshold. In some embodiments of the present disclosure, through mutual cooperation between the main acquisition vehicle and the auxiliary acquisition vehicle, the coordinate transformation matrix between the startup vehicle coordinate system of the main acquisition vehicle and the startup vehicle coordinate system of the auxiliary acquisition vehicle is calculated based on the K sets of ego vehicle position information and the K sets of main sensed data packets, and then the ego vehicle position information of the auxiliary acquisition vehicle is projected into the vehicle coordinate system of the main acquisition vehicle based on the coordinate transformation matrix to obtain the three-dimensional coordinate true value of the auxiliary acquisition vehicle. Since the distance between the preset distance position and the main acquisition vehicle is greater than the preset distance threshold, the obtained three-dimensional coordinate true value of the auxiliary acquisition vehicle is a three-dimensional coordinate true value of an ultra-long distance, thereby realizing sensing of a three-dimensional coordinate true value of a vehicle at an ultra-long distance by the main acquisition vehicle.

In some embodiments, the coordinate transformation matrix determination module 320 may include:

a first calculation submodule configured to: take a first set of main sensed data packets in the K sets of main sensed data packets as a current set of main sensed data packets; calculate first relative distance errors by traversing three-dimensional coordinate information of sensed vehicles corresponding to timestamp frames in the current set of main sensed data packets and first ego vehicle position information in a first set of ego vehicle position information based on nearest neighbor algorithm; determine three-dimensional coordinate information of a sensed vehicle corresponding to a minimum one of the first relative distance errors to be first three-dimensional coordinate information of the auxiliary acquisition vehicle acquired by the main acquisition vehicle at a first timestamp frame in the current set of main sensed data packets; and determine the first ego vehicle position information to be ego vehicle position information of the auxiliary acquisition vehicle corresponding to the first timestamp frame in the current set of main sensed data packets;

a second calculation submodule configured to: calculate, for each timestamp frame in the current set of main sensed data packets except the first timestamp frame, a second relative distance error based on three-dimensional coordinate information of a sensed vehicle corresponding to the timestamp frame and the first three-dimensional coordinate information; determine three-dimensional coordinate information of a sensed vehicle corresponding to one of the second relative distance errors, which is less than a preset distance error threshold, to be second three-dimensional coordinate information of the auxiliary acquisition vehicle acquired by the main acquisition vehicle at the timestamp frame; calculate third relative distance errors by traversing the first set of ego vehicle position information and the second three-dimensional coordinate information based on nearest neighbor algorithm; and determine ego vehicle position information corresponding to a minimum one of the third relative distance errors to be ego vehicle position information of the auxiliary acquisition vehicle corresponding to the timestamp frame;

a current transformation matrix determination submodule configured to: calculate a transformation matrix corresponding to the current set of main sensed data packets based on the three-dimensional coordinate information of the auxiliary acquisition vehicle acquired by the main acquisition vehicle at each timestamp frame, ego vehicle position information of the auxiliary acquisition vehicle corresponding to each timestamp frame, and a preset general graph optimization formula; and take the transformation matrix as a current transformation matrix; and

a third calculation submodule configured to: take a next set of main sensed data packets following the current set of main sensed data packets as a current set of main sensed data packets; calculate, based on a next set of ego vehicle position information following the first set of ego vehicle position information and the current transformation matrix, first three-dimensional coordinate information of the auxiliary acquisition vehicle acquired by the main acquisition vehicle at the first timestamp frame in the current set of main sensed data packets; return to perform the calculating, for each timestamp frame in the current set of main sensed data packets except the first timestamp frame, a second relative distance error based on three-dimensional coordinate information of a sensed vehicle corresponding to the timestamp frame and the first three-dimensional coordinate information, until a transformation matrix corresponding to a final set of main sensed data packets in the K sets of main sensed data packets is obtained; and take the transformation matrix corresponding to the final set of main sensed data packets as the coordinate transformation matrix between the startup vehicle coordinate system of the main acquisition vehicle and the startup vehicle coordinate system of the auxiliary acquisition vehicle.

In some embodiments, the first coordinate true value determination module 330 may be configured to:

calculate the projection coordinate information of the auxiliary acquisition vehicle in the vehicle coordinate system of the main acquisition vehicle by left multiplying the coordinate transformation matrix by the ego vehicle position information acquired by the inertial sensor of the auxiliary acquisition vehicle at the preset distance position.

In some embodiments, the apparatus for determining a vehicle three-dimensional coordinate true value further includes:

a receiving module configured to: receive, after the projection coordinate information of the auxiliary acquisition vehicle in the vehicle coordinate system of the main acquisition vehicle is calculated based on the coordinate transformation matrix and the ego vehicle position information acquired by the inertial sensor of the auxiliary acquisition vehicle at the preset distance position, a two-dimensional annotation box of the auxiliary acquisition vehicle manually annotated in a target main sensed data packet; perform two-dimensional-three-dimensional matching between the two-dimensional annotation box and a three-dimensional bounding box corresponding to the projection coordinate information; and perform, when the matching is successful, the taking the projection coordinate information as a three-dimensional coordinate true value of the auxiliary acquisition vehicle, herein, the target main sensed data packet is a main sensed data packet acquired by the vehicle-side sensor of the main acquisition vehicle when the auxiliary acquisition vehicle continues to travel to the preset distance position and stops.

In some embodiments, the receiving module may include:

a projection submodule configured to: project the three-dimensional bounding box corresponding to the projection coordinate information to an image plane where the two-dimensional annotation box is located to obtain a two-dimensional projection bounding box; and
a matching submodule configured to: calculate a first area of intersection and a second area of union between the two-dimensional annotation box and the two-dimensional projection bounding box; calculate a quotient of the first area and the second area; and determine that the matching is successful when the quotient is greater than a preset value.

In some embodiments, the apparatus for determining a vehicle three-dimensional coordinate true value may further include:

an adjustment module configured to: receive, after the projection coordinate information is taken as the three-dimensional coordinate true value of the auxiliary acquisition vehicle, an adjustment to a vehicle height in the three-dimensional coordinate true value of the auxiliary acquisition vehicle to obtain an adjusted three-dimensional coordinate true value of the auxiliary acquisition vehicle.

In some embodiments, the apparatus for determining a vehicle three-dimensional coordinate true value may further include:

a second coordinate true value determination module configured to: calculate, after the projection coordinate information is taken as the three-dimensional coordinate true value of the auxiliary acquisition vehicle, a three-dimensional coordinate true value of the sensed vehicle in the vehicle coordinate system of the main acquisition vehicle based on the projection coordinate information and three-dimensional coordinate information of each sensed vehicle in an auxiliary sensed data packet acquired by the vehicle-side sensor of the auxiliary acquisition vehicle at the preset distance position.

The above apparatus embodiments correspond to the method embodiments and have same technical effects as the method embodiments. Refer to the method embodiments for details. The apparatus embodiments are obtained based on the method embodiments. Specific description may be obtained with reference to the method embodiments, which is not described in details herein.

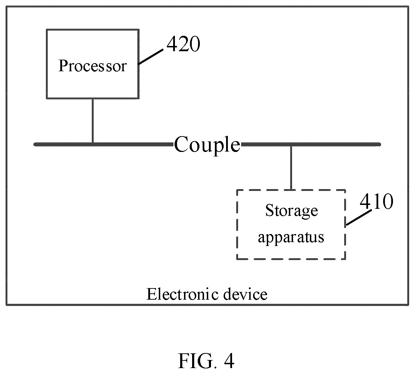

FIG. 4 is a schematic structural diagram of an electronic device according to some embodiments of the present disclosure. As shown in FIG. 4, the electronic device includes: one or more processors 410; and a storage apparatus 420 coupled to the one or more processors 410 and configured to store one or more programs. The one or more programs, when executed by the one or more processors 410, causes the electronic device to implement the method for determining a vehicle three-dimensional coordinate true value as provided in any one of the embodiments of the present disclosure.

Based on the above embodiments, some other embodiments of the present disclosure provide a vehicle. The vehicle includes the apparatus for determining a vehicle three-dimensional coordinate true value as provided in any one of the embodiments of the present disclosure or the electronic device as provided in any one of the embodiments of the present disclosure.

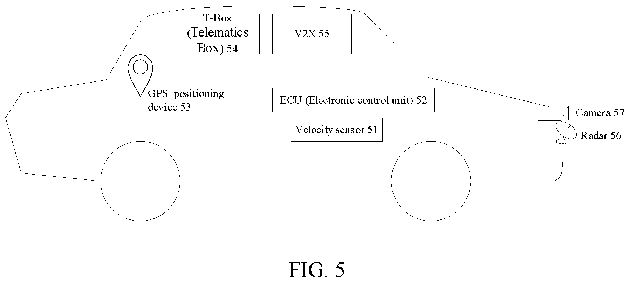

FIG. 5 is a schematic diagram of a vehicle according to some embodiments of the present disclosure. As shown in FIG. 5, the vehicle includes a velocity sensor 51, an electronic control unit (ECU) 52, a global positioning system (GPS) positioning device 53, and a telematics box (T-Box) 54. The velocity sensor 51 is configured to measure a vehicle velocity and use the vehicle velocity as an empirical velocity for model training. The GPS positioning device 53 is configured to obtain a current geographical location of the vehicle. The T-Box 54 may serve as a gateway to communicate with a server. The ECU 52 may perform the method for determining a vehicle three-dimensional coordinate true value.

In addition, the vehicle may further include: a vehicle-to-everything (V2X) module 55, a radar 56, and a camera 57. The V2X module 55 is configured to communicate with other vehicles or roadside devices. The radar 56 or the camera 57 is configured to sense road environment information in front and/or in other directions to obtain original point cloud data. The radar 56 and/or the camera 57 may be arranged in the front and/or the rear of a vehicle body.

Based on the above method embodiments, some other embodiments of the present disclosure provide a computer-readable storage medium, having a computer program stored therein. The program, when executed by a processor, implements the method for determining a vehicle three-dimensional coordinate true value as provided in any one of the embodiments of the present disclosure.

It should be understood by those of ordinary skill in the art that each accompanying drawing is merely a schematic diagram of one embodiment, and the modules or flows in the accompanying drawings are not definitely necessary for implementing the present disclosure.

It should be understood by those of ordinary skill in the art that the modules in the apparatus in the embodiments may be distributed in the apparatus of the embodiments according to the description of the embodiments or located in one or more apparatuses different from this embodiment through corresponding variation. The modules of the above embodiments may be combined into one module or further split into multiple sub-modules.

Finally, it should be noted that the above embodiments are only intended to illustrate the technical solutions of the present disclosure rather than limiting the present disclosure; although the foregoing disclosure is illustrated in detail with reference to the above embodiments, it should be understood by those of ordinary skill in the art that modifications may still be made to the technical solutions recorded in the foregoing embodiments, or equivalent replacements may be made to some technical features thereof; and these modifications or replacements do not make corresponding technical solutions depart from the scope of the technical solutions of the embodiments of the present disclosure.

**Claims**

1. A method for determining a vehicle three-dimensional coordinate true value, wherein, in an initial state, each of a main acquisition vehicle and an auxiliary acquisition vehicle is located at an initial point, and a vehicle-side sensor of each of the main acquisition vehicle and the auxiliary acquisition vehicle faces front of the vehicle; when the auxiliary acquisition vehicle travels forward, the main acquisition vehicle is stationary, and the vehicle-side sensors of the main acquisition vehicle and the auxiliary acquisition vehicle simultaneously acquire sensed data packets in a preset duration each time the auxiliary acquisition vehicle travels by a preset interval distance and stops; when the auxiliary acquisition vehicle stops for K times, the auxiliary acquisition vehicle continues to travel to a preset distance position and stops, in this case, the vehicle-side sensors of the main acquisition vehicle and the auxiliary acquisition vehicle simultaneously acquire sensed data packets in the preset duration, and the method comprises:

   obtaining K sets of ego vehicle position information acquired by an inertial sensor of the auxiliary acquisition vehicle during K stops and K sets of main sensed data packets acquired by the main acquisition vehicle during K stops, wherein K is greater than a preset number of times, each set of main sensed data packets is formed by sensed data with a plurality of timestamp frames, the sensed data of each timestamp frame comprises three-dimensional coordinate information of a sensed vehicle, and the sensed vehicle comprises at least the auxiliary acquisition vehicle;

   calculating a coordinate transformation matrix between a startup vehicle coordinate system of the main acquisition vehicle and a startup vehicle coordinate system of the auxiliary acquisition vehicle based on the K sets of ego vehicle position information and the K sets of main sensed data packets, wherein the startup vehicle coordinate system refers to a vehicle coordinate system that uses a position, where an on-board computer of the vehicle is started up, as a coordinate system origin; and

   calculating projection coordinate information of the auxiliary acquisition vehicle in the vehicle coordinate system of the main acquisition vehicle based on the coordinate transformation matrix and ego vehicle position information acquired by the inertial sensor of the auxiliary acquisition vehicle at the preset distance position; and taking the projection coordinate information as a three-dimensional coordinate true value of the auxiliary acquisition vehicle, wherein a distance between the preset distance position and the main acquisition vehicle is greater than a preset distance threshold.

2. The method according to claim 1, wherein the calculating a coordinate transformation matrix between a startup vehicle coordinate system of the main acquisition vehicle and a startup vehicle coordinate system of the auxiliary acquisition vehicle based on the K sets of ego vehicle position information and the K sets of main sensed data packets comprises:

   taking a first set of main sensed data packets in the K sets of main sensed data packets as a current set of main sensed data packets; calculating first relative distance errors by traversing three-dimensional coordinate information of sensed vehicles corresponding to timestamp frames in the current set of main sensed data packets and first ego vehicle position information in a first set of ego vehicle position information based on nearest neighbor algorithm; determining three-dimensional coordinate information of a sensed vehicle corresponding to a minimum one of the first relative distance errors to be first three-dimensional coordinate information of the auxiliary acquisition vehicle acquired by the main acquisition vehicle at a first timestamp frame in the current set of main sensed data packets; and determining the first ego vehicle position information to be ego vehicle position information of the auxiliary acquisition vehicle corresponding to the first timestamp frame in the current set of main sensed data packets;

calculating, for each timestamp frame in the current set of main sensed data packets except the first timestamp frame, a second relative distance error based on three-dimensional coordinate information of a sensed vehicle corresponding to the timestamp frame and the first three-dimensional coordinate information; determining three-dimensional coordinate information of a sensed vehicle corresponding to one of the second relative distance errors, which is less than a preset distance error threshold, to be second three-dimensional coordinate information of the auxiliary acquisition vehicle acquired by the main acquisition vehicle at the timestamp frame;

calculating third relative distance errors by traversing the first set of ego vehicle position information and the second three-dimensional coordinate information based on nearest neighbor algorithm; and determining ego vehicle position information corresponding to a minimum one of the third relative distance errors to be ego vehicle position information of the auxiliary acquisition vehicle corresponding to the timestamp frame;

calculating a transformation matrix corresponding to the current set of main sensed data packets based on the three-dimensional coordinate information of the auxiliary acquisition vehicle acquired by the main acquisition vehicle at each timestamp frame, ego vehicle position information of the auxiliary acquisition vehicle corresponding to each timestamp frame, and a preset general graph optimization formula; and taking the transformation matrix as a current transformation matrix; and

taking a next set of main sensed data packets following the current set of main sensed data packets as a current set of main sensed data packets; calculating, based on a next set of ego vehicle position information following the first set of ego vehicle position information and the current transformation matrix, first three-dimensional coordinate information of the auxiliary acquisition vehicle acquired by the main acquisition vehicle at the first timestamp frame in the current set of main sensed data packets; returning to perform the calculating, for each timestamp frame in the current set of main sensed data packets except the first timestamp frame, a second relative distance error based on three-dimensional coordinate information of a sensed vehicle corresponding to the timestamp frame and the first three-dimensional coordinate information, until a transformation matrix corresponding to a final set of main sensed data packets in the K sets of main sensed data packets is obtained; and taking the transformation matrix corresponding to the final set of main sensed data packets as the coordinate transformation matrix between the startup vehicle coordinate system of the main acquisition vehicle and the startup vehicle coordinate system of the auxiliary acquisition vehicle.

3. The method according to claim 1 or 2, wherein the calculating projection coordinate information of the auxiliary acquisition vehicle in the vehicle coordinate system of the main acquisition vehicle based on the coordinate transformation matrix and ego vehicle position information acquired by the inertial sensor of the auxiliary acquisition vehicle at the preset distance position comprises:

calculating the projection coordinate information of the auxiliary acquisition vehicle in the vehicle coordinate system of the main acquisition vehicle by left multiplying the coordinate transformation matrix by the ego vehicle position information acquired by the inertial sensor of the auxiliary acquisition vehicle at the preset distance position.

4. The method according to claim 1, wherein subsequent to the calculating projection coordinate information of the auxiliary acquisition vehicle in the vehicle coordinate system of the main acquisition vehicle based on the coordinate transformation matrix and ego vehicle position information acquired by the inertial sensor of the auxiliary acquisition vehicle at the preset distance position, the method further comprises:

receiving a two-dimensional annotation box of the auxiliary acquisition vehicle manually annotated in a target main sensed data packet; performing two-dimensional-three-dimensional matching between the two-dimensional annotation box and a three-dimensional bounding box corresponding to the projection coordinate information; and performing, when the matching is successful, the taking the projection coordinate information as a three-dimensional coordinate true value of the auxiliary acquisition vehicle, wherein the target main sensed data packet is a main sensed data packet acquired by the vehicle-side sensor of the main acquisition vehicle when the auxiliary acquisition vehicle continues to travel to the preset distance position and stops.

5. The method according to claim 4, wherein the performing two-dimensional-three-dimensional matching between the two-dimensional annotation box and a three-dimensional bounding box corresponding to the projection coordinate information comprises:

projecting the three-dimensional bounding box corresponding to the projection coordinate information to an image plane where the two-dimensional annotation box is located to obtain a two-dimensional projection bounding box; and

calculating a first area of intersection and a second area of union between the two-dimensional annotation box and the two-dimensional projection bounding box, calculating a quotient of the first area and the second area, and determining that the matching is successful when the quotient is greater than a preset value.

6. The method according to claim 1, wherein subsequent to the taking the projection coordinate information as a three-dimensional coordinate true value of the auxiliary acquisition vehicle, the method further comprises:
receiving an adjustment to a vehicle height in the three-dimensional coordinate true value of the auxiliary acquisition vehicle to obtain an adjusted three-dimensional coordinate true value of the auxiliary acquisition vehicle.

7. The method according to claim 1, wherein subsequent to the taking the projection coordinate information as a three-dimensional coordinate true value of the auxiliary acquisition vehicle, the method further comprises:
calculating, based on the projection coordinate information and three-dimensional coordinate information of each sensed vehicle in an auxiliary sensed data packet acquired by the vehicle-side sensor of the auxiliary acquisition vehicle at the preset distance position, a three-dimensional coordinate true value of the sensed vehicle in the vehicle coordinate system of the main acquisition vehicle.

8. An apparatus for determining a vehicle three-dimensional coordinate true value, wherein, in an initial state, each of a main acquisition vehicle and an auxiliary acquisition vehicle is located at an initial point, and a vehicle-side sensor of each of the main acquisition vehicle and the auxiliary acquisition vehicle faces front of the vehicle; when the auxiliary acquisition vehicle travels forward, the main acquisition vehicle is stationary, and the vehicle-side sensors of the main acquisition vehicle and the auxiliary acquisition vehicle simultaneously acquire sensed data packets in a preset duration each time the auxiliary acquisition vehicle travels by a preset interval distance and stops; when the auxiliary acquisition vehicle stops for K times, the auxiliary acquisition vehicle continues to travel to a preset distance position and stops, in this case, the vehicle-side sensors of the main acquisition vehicle and the auxiliary acquisition vehicle simultaneously acquire the sensed data packets in the preset duration, and the apparatus comprises:

an obtaining module configured to: obtain K sets of ego vehicle position information acquired by an inertial sensor of the auxiliary acquisition vehicle during K stops and K sets of main sensed data packets acquired by the main acquisition vehicle during K stops, wherein K is greater than a preset number of times, each set of main sensed data packets is formed by sensed data with a plurality of timestamp frames, the sensed data of each timestamp frame comprises three-dimensional coordinate information of a sensed vehicle, and the sensed vehicle comprises at least the auxiliary acquisition vehicle;

a coordinate transformation matrix determination module configured to: calculate a coordinate transformation matrix between a startup vehicle coordinate system of the main acquisition vehicle and a startup vehicle coordinate system of the auxiliary acquisition vehicle based on the K sets of ego vehicle position information and the K sets of main sensed data packets, wherein the startup vehicle coordinate system refers to a vehicle coordinate system that uses a position, where an on-board computer of the vehicle is started up, as a coordinate system origin; and

a first coordinate true value determination module configured to: calculate projection coordinate information of the auxiliary acquisition vehicle in the vehicle coordinate system of the main acquisition vehicle based on the coordinate transformation matrix and ego vehicle position information acquired by the inertial sensor of the auxiliary acquisition vehicle at the preset distance position; and taking the projection coordinate information as a three-dimensional coordinate true value of the auxiliary acquisition vehicle, wherein a distance between the preset distance position and the main acquisition vehicle is greater than a preset distance threshold.

9. The apparatus according to claim 8, wherein the coordinate transformation matrix determination module comprises:

a first calculation submodule configured to: take a first set of main sensed data packets in the K sets of main sensed data packets as a current set of main sensed data packets; calculate first relative distance errors by traversing three-dimensional coordinate information of sensed vehicles corresponding to timestamp frames in the current set of main sensed data packets and first ego vehicle position information in a first set of ego vehicle position information based on nearest neighbor algorithm; determine three-dimensional coordinate information of a sensed vehicle corresponding to a minimum one of the first relative distance errors to be first three-dimensional coordinate information of the auxiliary acquisition vehicle acquired by the main acquisition vehicle at a first timestamp frame in the current set of main sensed data packets; and determine the first ego vehicle position information to be ego vehicle position information of the auxiliary acquisition vehicle corresponding to the first timestamp frame in the current set of main sensed data packets;

a second calculation submodule configured to: calculate, for each timestamp frame in the current set of main sensed data packets except the first timestamp frame, a second relative distance error based on three-dimensional coordinate information of a sensed vehicle corresponding to the timestamp frame and the first three-dimensional coordinate information; determine three-dimensional coordinate information of a sensed vehicle corresponding to one of the second relative distance errors, which is less than a preset distance error threshold, to be second three-dimensional coordinate information of the auxiliary acquisition vehicle acquired by the main acquisition vehicle at the timestamp frame; calculate third relative distance errors by traversing the first set of ego vehicle position information and the second three-dimensional coordinate information based on nearest neighbor algorithm; and determine ego vehicle position information corresponding to a minimum one of the third relative distance errors to be ego vehicle position information of the auxiliary acquisition vehicle corresponding to the timestamp frame;

a current transformation matrix determination submodule configured to: calculate a transformation matrix corresponding to the current set of main sensed data packets based on the three-dimensional coordinate information of the auxiliary acquisition vehicle acquired by the main acquisition vehicle at each timestamp frame, ego vehicle position information of the auxiliary acquisition vehicle corresponding to each timestamp frame, and a preset general graph optimization formula; and take the transformation matrix as a current transformation matrix; and

a third calculation submodule configured to: take a next set of main sensed data packets following the current set of main sensed data packets as a current set of main sensed data packets; calculate, based on a next set of ego vehicle position information following the first set of ego vehicle position information and the current transformation matrix, first three-dimensional coordinate information of the auxiliary acquisition vehicle acquired by the main acquisition vehicle at the first timestamp frame in the current set of main sensed data packets; return to perform the calculating, for each timestamp frame in the current set of main sensed data packets except the first timestamp frame, a second relative distance error based on three-dimensional coordinate information of a sensed vehicle corresponding to the timestamp frame and the first three-dimensional coordinate information, until a transformation matrix corresponding to a final set of main sensed data packets in the K sets of main sensed data packets is obtained; and take the transformation matrix corresponding to the final set of main sensed data packets as the coordinate transformation matrix between the startup vehicle coordinate system of the main acquisition vehicle and the startup vehicle coordinate system of the auxiliary acquisition vehicle.

10. The apparatus according to claim 8 or 9, wherein the first coordinate true value determination module is configured to: calculate the projection coordinate information of the auxiliary acquisition vehicle in the vehicle coordinate system of the main acquisition vehicle by left multiplying the coordinate transformation matrix by the ego vehicle position information acquired by the inertial sensor of the auxiliary acquisition vehicle at the preset distance position.

11. The apparatus according to claim 8, wherein the apparatus further comprises:
a receiving module configured to: receive, subsequent to the calculating projection coordinate information of the auxiliary acquisition vehicle in the vehicle coordinate system of the main acquisition vehicle is calculated based on the coordinate transformation matrix and the ego vehicle position information acquired by the inertial sensor of the auxiliary acquisition vehicle at the preset distance position, a two-dimensional annotation box of the auxiliary acquisition vehicle manually annotated in a target main sensed data packet; perform two-dimensional-three-dimensional matching between the two-dimensional annotation box and a three-dimensional bounding box corresponding to the projection coordinate information; and perform, when the matching is successful, the taking the projection coordinate information as a three-dimensional coordinate true value of the auxiliary acquisition vehicle, wherein the target main sensed data packet is a main sensed data packet acquired by the vehicle-side sensor of the main acquisition vehicle when the auxiliary acquisition vehicle continues to travel to the preset distance position and stops.

12. The apparatus according to claim 11, wherein the receiving module comprises:

a projection submodule configured to: project the three-dimensional bounding box corresponding to the projection coordinate information to an image plane where the two-dimensional annotation box is located to obtain a two-dimensional projection bounding box; and
a matching submodule configured to: calculate a first area of intersection and a second area of union between the two-dimensional annotation box and the two-dimensional projection bounding box, calculate a quotient of the first area and the second area, and determine that the matching is successful when the quotient is greater than a preset value.

13. The apparatus according to claim 8, wherein the apparatus further comprises:
an adjustment module configured to: receive, subsequent to the taking the projection coordinate information as the three-dimensional coordinate true value of the auxiliary acquisition vehicle, an adjustment to a vehicle height in the three-dimensional coordinate true value of the auxiliary acquisition vehicle to obtain an adjusted three-dimensional coordinate true value of the auxiliary acquisition vehicle.

14. The apparatus according to claim 1, wherein the apparatus further comprises:
a second coordinate true value determination module configured to: subsequent to taking the projection coordinate information as the three-dimensional coordinate true value of the auxiliary acquisition vehicle, calculate, based on the projection coordinate information and three-dimensional coordinate information of each sensed vehicle in an auxiliary sensed data packet acquired by the vehicle-side sensor of the auxiliary acquisition vehicle at the preset distance position, a three-dimensional coordinate true value of the sensed vehicle in the vehicle coordinate system of the main acquisition vehicle.

15. A computer-readable storage medium, having a computer program stored therein, wherein the program, when executed by a processor, implements the method according to any one of claims 1 to 7.

16. An electronic device, comprising:

one or more processors; and
a storage apparatus coupled to the one or more processors and configured to store one or more programs, wherein the one or more programs, when executed by the one or more processors, causes the electronic device to implement the method according to any one of claims 1 to 7.

17. A vehicle, comprising the apparatus according to any one of claims 8 to 14 or the electronic device according to claim 16.

Obtain K sets of ego vehicle position information acquired by an inertial sensor of the auxiliary acquisition vehicle during K stops and K sets of main sensed data packets acquired by the main acquisition vehicle during K stops, wherein K is greater than a preset number of times, each set of main sensed data packets is formed by sensed data with a plurality of timestamp frames, the sensed data of each timestamp frame includes three-dimensional coordinate information of a sensed vehicle, and the sensed vehicle includes at least the auxiliary acquisition vehicle

S110

Calculate a coordinate transformation matrix between a startup vehicle coordinate system of the main acquisition vehicle and a startup vehicle coordinate system of the auxiliary acquisition vehicle based on the K sets of ego vehicle position information and the K sets of main sensed data packets, wherein the startup vehicle coordinate system refers to a vehicle coordinate system that uses a position, where an on-board computer of the vehicle is started up, as a coordinate system origin

S120

Calculate projection coordinate information of the auxiliary acquisition vehicle in the vehicle coordinate system of the main acquisition vehicle based on the coordinate transformation matrix and ego vehicle position information acquired by the inertial sensor of the auxiliary acquisition vehicle at the preset distance position; and take the projection coordinate information as a three-dimensional coordinate true value of the auxiliary acquisition vehicle, wherein a distance between the preset distance position and the main acquisition vehicle is greater than a preset distance threshold

S130

FIG. 1

FIG. 2

310

320

330

| Obtaining module | Coordinate transformation matrix determination module | First coordinate true value determination module |

FIG. 3

Processor

420

Couple

Storage
apparatus

410

Electronic device

FIG. 4

FIG. 5

<table>
<tr><td colspan="2" style="text-align:center"><strong>INTERNATIONAL SEARCH REPORT</strong></td><td>International application No.<br><strong>PCT/CN2023/110169</strong></td></tr>
</table>

**A. CLASSIFICATION OF SUBJECT MATTER**

G01C 21/28(2006.01)i

According to International Patent Classification (IPC) or to both national classification and IPC

**B. FIELDS SEARCHED**

Minimum documentation searched (classification system followed by classification symbols)

IPC: G01C

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; IEEE: 车辆, 坐标, 真值, 停车, 停下, 位置, 转换, 矩阵, 投影, 映射, 距离, 辅, 副, 感知, 开机, vehicle?, coordinate?, stop+, location, site, transformat+, matrix, project+, distance, assist+

**C. DOCUMENTS CONSIDERED TO BE RELEVANT**

| Category* | Citation of document, with indication, where appropriate, of the relevant passages | Relevant to claim No. |
|---|---|---|
| A | CN 114627442 A (TSINGHUA UNIVERSITY et al.) 14 June 2022 (2022-06-14) description, paragraphs 6-143, and figures 1-9 | 1-17 |
| A | CN 112633035 A (MOMENTA (SUZHOU) TECHNOLOGY CO., LTD.) 09 April 2021 (2021-04-09) entire document | 1-17 |
| A | CN 110135376 A (BEIJING BAIDU NETCOM SCIENCE AND TECHNOLOGY CO., LTD.) 16 August 2019 (2019-08-16) entire document | 1-17 |
| A | WO 2021134441 A1 (SHENZHEN DEEPROUTE AI CO., LTD.) 08 July 2021 (2021-07-08) entire document | 1-17 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 October 2023** | **05 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2023/110169** |

| Patent document cited in search report | | | Publication date (day/month/year) | Patent family member(s) | Publication date (day/month/year) |
|---|---|---|---|---|---|
| CN | 114627442 | A | 14 June 2022 | None | |
| CN | 112633035 | A | 09 April 2021 | None | |
| CN | 110135376 | A | 16 August 2019 | None | |
| WO | 2021134441 | A1 | 08 July 2021 | None | |

Form PCT/ISA/210 (patent family annex) (July 2022)